# EUROPÄISCHE PATENTSCHRIFT

(11) **EP 1 632 700 B1**
(45) Veröffentlichungstag und Bekanntmachung des Hinweises auf die Patenterteilung: **14.05.2008**
(21) Anmeldenummer: 05016654.5
(22) Anmeldetag: 01.08.2005
(51) Int. Cl.: F16K 11/087

(54) **Ventilvorrichtung**
Valve device
Dispositif de vanne

(30) Priorität: 02.09.2004 DE 102004042512
(43) Veröffentlichungstag der Anmeldung: 08.03.2006
(73) Patentinhaber: HYDAC Accessories GmbH, 66280 Sulzbach/Saar (DE)
(72) Erfinder: Michel, Bernd, 66578 Schiffweiler (DE)
(74) Vertreter: Bartels & Partner

(56) Entgegenhaltungen:
- EP-A- 0 312 505
- WO-A-03/104692
- DE-A1- 2 730 375
- DE-A1- 10 157 938
- DE-A1- 19 816 041
- DE-C1- 19 949 870

## Beschreibung

Die Erfindung betrifft eine Ventilvorrichtung gemäß der Merkmalsausgestaltung des Oberbegriffes des Patentanspruches 1.

Im Stand der Technik sind Verfahren zum Betrieb einer Medien-Förderanlage, insbesondere Farb- oder Lackieranlagen bekannt, mit mindestens einem Vorratsbehälter für ein Medium, das mittels einer Steuereinheit in eine Förderleitung eingespeist wird und mittels einer Pumpeinheit in einer Pumprichtung an eine Abgabeeinheit weiter transportiert wird, wobei für einen Reinigungsvorgang in umgekehrter Richtung zum Vorratsbehälter ein Reinigungsmedium in die Förderleitung eingespeist wird, das vor der Steuereinheit über eine Abzweigeinheit die Förderleitung verläßt.

Verfahren dieser Art finden insbesondere Anwendung in der Lackierindustrie, wo Lackieranlagen beispielsweise der Lackierung von Karosserieteilen bei Kraftfahrzeugen dienen, wobei der dahingehende Lackauftrag von Hand aber auch mittels Automaten, wie Lackierroboter oder dergleichen, erfolgen kann. Eine Anforderung an dahingehende Lackieranlagen ist es, häufig die Lackart (Metallic-Lacke) und/oder die Farbe entsprechend wechseln zu können. Moderne Lackieranlagen sind demgemäß nicht nur mit leistungsfähigen Farbwechsel- und Dosieranlagen ausgerüstet, sondern auch mit Reinigungseinrichtungen, die es erlauben, bei einem Farb- oder Lackwechsel das bisher in der Förderleitung eingesetzte Medium (Lack oder Farbe) aus der Förderleitung derart in den Vorratsbehälter, aus dem das Medium stammt, zurückzubringen und dabei die Förderleitung von Medienrückständen derart zu befreien, dass beim Einsatz des neuen Mediums (Lack oder Farbe) es nicht dergestalt zu Störungen kommt, dass in ungewollter Weise die Reste des jeweils zuvor verwendeten Mediums wiederum auf die jeweilige Werkstückoberfläche (Kfz-Karosserieteile) gelangen können.

Im Hinblick auf dieses Anforderungsprofil stellt der Stand der Technik Lösungen bereit, beispielsweise Lackieranlagen (DE 199 37 474 C2) mit in Farbspritzkabinen angeordneten Pistoleneinheiten mit denen der Lack auf ein Werkstück aufgebracht werden kann, mit einer Farbwechseleinrichtung, an die mindestens zwei Lack-Speiseeinrichtungen angeschlossen sind, mit einer Verbindungseinrichtung mit der die jeweilige Pistoleneinheit und die Farbwechseleinrichtung miteinander verbunden sind, mit einer der jeweiligen Pistoleneinheit zugeordneten Molchstation, mit einer der Farbwechseleinrichtung zugeordneten Molchstation sowie einem Molch, welcher während einer Reinigungsphase von der der Pistoleneinheit zugeordneten Molchstation durch die Verbindungseinrichtung hindurch in die der Farbwechseleinrichtung zugeordnete Molchstation und wieder zurückbewegt werden kann. Ein dahingehender fachsprachlich bezeichneter Molch ist nichts anderes als ein in der Förderleitung hin und her bewegbarer Verdrängungskörper, der beispielsweise mittels Druckluft oder mittels eines Reinigungsmediums angetrieben in umgekehrter Richtung als der Farb- oder Lackstrom in der Förderleitung deren Abreinigung vornimmt, indem er das in der Förderleitung vor einem Farb- oder Lackwechsel verbliebene Medium in den Vorratsbehälter wieder ausschiebt. Dahingehende Molch-Reinigungseinrichtungen haben sich bewährt, und sind in einer Vielzahl von Ausführungsformen im Stand der Technik nachweisbar (DE 197 09 988 C2, DE 101 57 938 A1, DE 199 62 224 A1 etc.).

Moderne Farb- und Lackieranlagen bestehen wie dargelegt aus einer Vielzahl von Einzelkomponenten, insbesondere auch in Form von Abzweigstellen, von wo aus der Abzweig der Farb- oder Lackmenge zu den Einzelfarbkabinen oder Sprühauftrageinrichtungen wie Pistoleneinheiten aus der Hauptförderleitung erfolgt. Gerade an diesen Abzweigstellen kommt es aber zu Hemmnissen im Betrieb des Molchreinigungssystems, sofern der Molch sich an der jeweiligen Abzweigstelle verkantet und ferner treten an den Abzweigstellen häufig Ablagerungen in Form von Farb- und Lackresten auf, die das Abreinigungsergebnis beeinträchtigen.

Des weiteren sind im Stand der Technik (EP-A-0 312 505) gattungsgemäße Ventilvorrichtungen aufgezeigt mit einem Kugelhahn, der ein Ventilgehäuseteil mit mindestens zwei Fluidanschlußstellen aufweist, die mittels einer im Ventilgehäuseteil angeordneten Ventilkugel fluidführend miteinander verbindbar oder voneinander trennbar sind, die mittels einer Schaltwelle, die zumindest teilweise das Ventilgehäuseteil durchgreift, betätigbar ist. So zeigt die WO 03/104692 A einen gattungsgemäßen Kugelhahn als Ventilvorrichtung, der beispielsweise in Wasserversorgungsleitungssystemen eingesetzt wird, um den Durchfluß durch bestimmte Leitungsabschnitte gezielt zu unterbrechen. Die bekannte Lösung weist ein separates Entleerungsventil auf, um aus Frostschutzgründen einen von der Wasserversorgung abgetrennten Leitungsabschnitt entleeren zu können. Bei einer bevorzugten Ausführungsform der bekannten Lösung ist der Kugelhahn dadurch charakterisiert, dass der Entleerungskanal im wesentlichen quer zu einer Durchgangsöffnung in dem Ventilkörper angeordnet ist, wodurch gewährleistet ist, dass der Entleerungskanal in einen zwischen dem Ventilkörper und dem Gehäuse vorhandenen Ringraum mündet. Der Ringraum stellt insoweit ein Totwassergebiet dar, in dem sich unter Umständen Bakterien und/oder Krankheitskeime ansammeln können. Durch den in dieses Totwassergebiet mündenden Entleerungskanal kann nun einerseits Wasser austreten; andererseits kann durch den Entleerungskanal auch Frischwasser in das Totwassergebiet gelangen, wenn sich der Ventilkörper in der dahingehenden Schaltstellung befindet. Dadurch ist eine gute Durchmischung der sich in dem Totwassergebiet ansammelnden Flüssigkeit gewährleistet. Darüber hinaus dient der Entleerungskanal dann der Belüftung des Ringraumes, wenn sich der Ventilkörper in einer weiteren anderen Schaltstellung befindet.

Ausgehend von diesem Stand der Technik liegt der Erfindung die Aufgabe zugrunde, eine Ventilvorrichtung mit einem an sich bekannten Kugelhahn dahingehend weiter zu verbessern, dass es auch im Bereich der genannten Abzweigstellen in einer Farb- und Lackieranlage zu keinem Hemmnis und zum rückstandsfreien Betrieb des Abreinigungsmolches kommt, wobei die erfindungsgemäße Ventilvorrichtung gleichfalls kostengünstig realisierbar sein soll.

Eine dahingehende Aufgabe löst eine Ventilvorrichtung mit den Merkmalen des Patentanspruches 1 in seiner Gesamtheit.

Dadurch, dass gemäß dem kennzeichnenden Teil des Patentanspruches 1 ein weiteres Ventilagehäuseteil eine Durchfahrtsöffnung für die Durchfahrt des Molches aufweist mit zwei Anschlußstellen für den Anschluß an die farb- und/oder lackführenden Verbindungsleitungen der Anlage und dass in dem weiteren Ventilgehäuseteil eine Durchgangsöffnung vorhanden ist, die in die Durchfahrtsöffnung totraumfrei mündet und die von der Ventilkugel absperrbar ist, wobei die Ventilkugel nahezu totraumfrei die Durchgangsöffnung überdeckt, ist über das weitere Ventilgehäuseteil mit der Durchfahrtsöffnung ein hemmnisfreier Verfahrbetrieb für den jeweiligen Reinigungsmolch erreicht und dass mit dem weiteren Ventilgehäuseteil zusammenwirkende erste Ventilgehäuseteil mit dem Kugelhahn wirkt über die Durchgangsöffnung auf den Medienstrom ein, so dass in der einen Schaltstellung des Kugelhahnes die Medienentnahme an Farbe oder Lack für eine Auftrageinrichtung (Sprüh- oder Spritzpistole) innerhalb einer Farb- oder Lackierkabine ermöglicht ist und in der anderen Schaltstellung, bei der die Durchgangsöffnung verschlossen ist, ist unabhängig vom Betrieb des Molchsystemes eine Abreinigung der fluidführenden Teile vom ersten Ventilgehäuseteil mit Kugelhahn bis zur Auftrageinrichtung in der Farb- oder Lackierkabine erreicht.

Da die erfindungsgemäße Ventilvorrichtung aufgrund der angesprochenen Systemtrennung nahezu totraumfrei arbeitet, ergeben sich insoweit auch nicht ungewollt Ablagerungsmöglichkeiten für Farb- oder Lackreste. Da die beiden Ventilgehäuseteile unmittelbar miteinander verbunden sind und zusammenwirken, insbesondere die Durchgangsöffnung im weiteren Ventilgehäuseteil unmittelbar in die Durchfahrtsöffnung für das Molchreinigungssystem mündet, und dergestalt von der Ventilkugel des Kugelhahnes abschließbar ist, sind im Bereich der dahingehenden Durchgangsöffnung in relevanter Weise keine Wandflächen geschaffen, die ungewollt für die Farb- oder Lackablagerung dienen könnten. Aufgrund des modularen Aufbaus läßt sich die Ventilvorrichtung kostengünstig herstellen und ist im übrigen mit ihren Komponenten auch funktionssicher im Gebrauch.

Weitere vorteilhafte Ausführungsformen der erfindungsgemäßen Ventilvorrichtung sind Gegenstand der Unteransprüche.

Im Folgenden wird die erfindungsgemäße Ventilvorrichtung anhand eines Ausführungsbeispieles nach der Zeichnung näher erläutert. Dabei zeigen in prinzipieller und nicht maßstäblicher Darstellung die
- Fig. 1 eine perspektivische Ansicht auf die Ventilvorrichtung, wobei der Handhebel des Kugelhahnes in die Spülstellung geschaltet ist,
- Fig. 2 einen Längsschnitt durch die Ventilvorrichtung gemäß stirnseitiger Ansicht von vorne auf die Fig. 1, wobei der Kugelhahn bei der Fig. 2 in seine Betriebsstellung geschaltet ist, und
- Fig. 3 einen Längsschnitt durch den oberen Teil der Ventilvorrichtung mit erstem Ventilgehäuseteil und Kugelhahn, wobei die dahingehende Schaltstellung des Kugelhahnes der Spülstellung gemäß Handhebelposition nach der Fig. 1 entspricht.

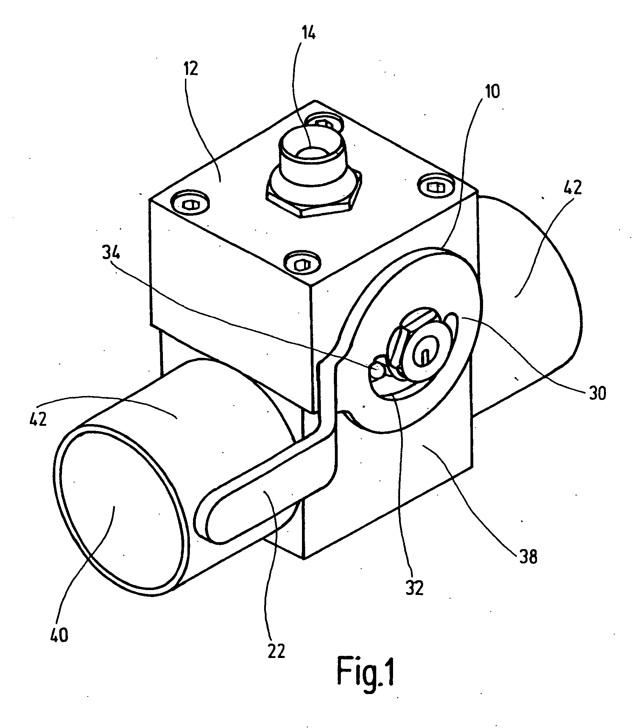

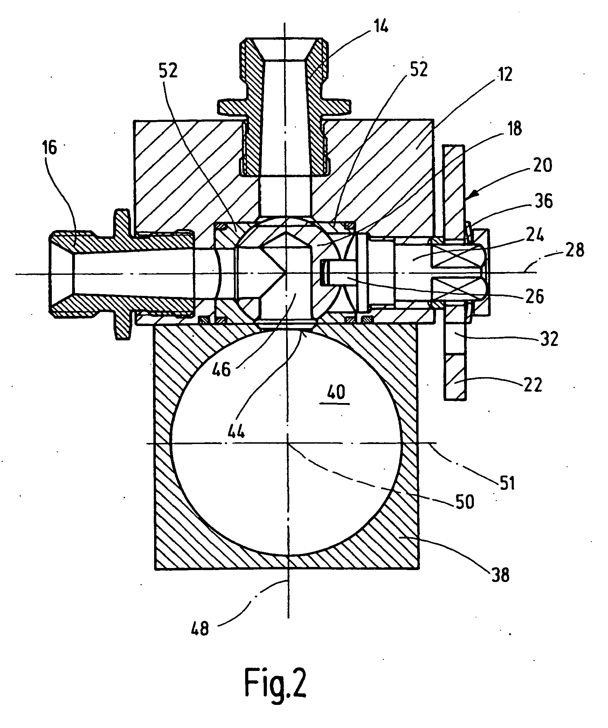

Die in der Fig. 1 gezeigte Ventilvorrichtung ist insbesondere für den Einsatz bei Farb- und Lackieranlagen vorgesehen, die mittels eines Molches abreinigbar sind. Die erfindungsgemäße Ventilvorrichtung ist mit einem Kugelhahn 10 versehen, der ein erstes Ventilgehäuseteil 12 mit zwei Fluidanschlußstellen 14, 16 aufweist, von denen in der Fig. 1 nur die eine obere Fluidanschlußstelle 14 wiedergegeben ist und die weitere, rückwärtig angeordnete Fluidanschlußstelle 16 ist durch das Ventilgehäuseteil 12 bedingt durch die perspektivische Ansicht verdeckt. Wie sich insbesondere aus der Fig. 2 ergibt, sind die beiden Fluidanschlußstellen 14, 16 mittels einer im Ventilgehäuseteil 12 angeordneten Ventilkugel 18 fluidführend miteinander verbindbar oder gemäß der Darstellung nach der Fig. 2 voneinander getrennt. Hierfür ist die Ventilkugel 18 mittels einer als ganzes mit 20 bezeichneten Betätigungseinrichtung ansteuerbar, die einen Handhebel 22 aufweist, der auf eine Schaltwelle 24 einwirkt, die an ihrem vorderen freien Ende einen in die Ventilkugel 18 eingreifenden Steuerzapfen 26 aufweist. Die Schaltwelle 24 ist entlang einer Achse 28 mittels des Handhebels 22 um 180° schwenkbar.

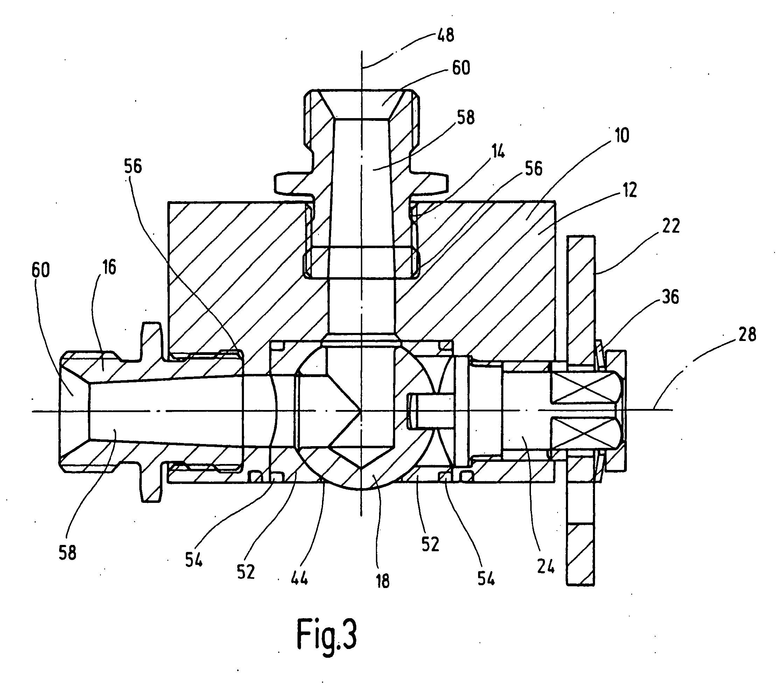

Zur sinnfälligen Begrenzung des genannten Schwenkbereiches um 180° mündet der Handhebel 22 gemäß der Darstellung nach der Fig. 1 in eine entsprechend schwenkbar angeordnete Steuerplatte 30 mit halbkreisförmiger Steuerausnehmung 32, in die ein stationärer Steuerzapfen 34 des ersten Ventilgehäuseteiles 12 eingreift. Entgegen der Kraft einer Tellerfeder 36 (vgl. Fig. 2 und 3) läßt sich demgemäß der Handhebel 22 von seiner in der Fig. 1 gezeigten Rückspülstellung im Uhrzeigersinn um 90° nach oben verschwenken, was einer Sperrstellung für die Ventilkugel 18 entspricht und bei nochmaligen Verschwenken um weitere 90° im Uhrzeigersinn weist der Handhebel 22 mit seinem freien Ende in entgegengesetzter Richtung zu der Darstellung nach der Fig. 1, was der Betriebsstellung für die Ventilkugel 18 gleichkommt gemäß der Darstellung nach der Fig. 2. In umgekehrter Reihenfolge wie beschrieben, also durch Schwenkbewegungen um jeweils 90°, entgegengesetzt dem Uhrzeigersinn läßt sich dann über den Handhebel 22 die Ventilkugel 18 von ihrer Betriebsstellung in die Sperrstellung und dann wieder in den Spülbetrieb rückschalten.

Die gezeigte Ventilvorrichtung weist darüber hinaus ein weiteres Ventilgehäuseteil 38 auf, das der einfacheren Darstellung wegen in der Fig. 3 nicht wiedergegeben ist. Das dahingehende weitere Ventilgehäuseteil 38 weist eine Durchfahrtsöffnung 40 kreisrunden Querschnitts auf (vgl. Fig. 2), für die Durchfahrt eines nicht näher dargestellten Molches eines an sich bekannten Abreinigungssystems. Das Ventilgehäuseteil 38 weist zwei zylindrische Rohrfortsätze als Anschlußstellen 42 auf, für den fluidführenden Anschluß an eine nicht näher dargestellte farb- und/oder lackführende Verbindungsleitung, die den Hauptstrom, der mittels einer Auftrageinrichtung abzugebenden Farb- oder Lackstromes führt. Wie eingangs erwähnt sind dahingehende Farb- und Lackieranlagen mit ihren Molchabreinigungssystemen bekannt, so dass an dieser Stelle hierauf nicht mehr näher eingegangen wird. In dem weiteren Ventilgehäuseteil 38 ist eine Durchgangsöffnung 44 vorhanden, die in die Durchfahrtsöffnung 40 mündet und die von der Ventilkugel 18 gemäß der Darstellung nach der Fig. 3 absperrbar ist.

Die Anordnung und mithin die Lagerung der Ventilkugel 18 im Ventilgehäuseteil 12 ist derart getroffen, dass in jeder ihrer möglichen Schaltstellungen oberhalb über der Durchgangsöffnung 44 diese nicht in die Durchfahrtsöffnung 40 eingreift. Hierdurch ist sichergestellt, dass in jeder Betriebsstellung des Kugelhahnes 10 ein die Durchfahrtsöffnung 40 durchfahrender Reinigungsmolch in einer Verfahrbewegung nicht anstoßen kann, so dass dergestalt ein hemmnisfreier Betrieb für die Gesamtreinigungsvorrichtung möglich ist. Aufgrund der nahezu totraumfreien Überdeckung der Durchgangsöffnung 44 mittels der Ventilkugel 18 ist sichergestellt, dass sich nicht ungewollt Farb- oder Lackreste in diesem Bereich anlagern können, was ansonsten einen reibungslosen Farb- oder Lackfarbwechsel beeinträchtigen könnte.

Bei der in der Fig. 2 dargestellten Betriebsstellung trennt die Ventilkugel 18 die beiden Fluidanschlußstellen 14, 16 voneinander ab, und stellt den Fluidweg sicher zwischen der nicht gesperrten Fluidanschlußstelle 16 und der Durchgangsöffnung 44. In der dahingehenden Betriebsstellung wird dann unter Druck stehendes Farb- oder Lackmedium aus der Durchfahrtsöffnung 40 entnommen, und über die Durchgangsöffnung 44 sowie den rechtwinklig angeordneten und freien Fluidweg 46 in der Ventilkugel 18 an die Fluidanschlußstelle 16 für einen Farb- oder Lackauftrag mittels einer geeigneten Auftrageinrichtung weitergeleitet. In der dahingehenden Betriebsstellung, die dem Farb- oder Lackauftrag dient, ist dann der Reinigungsmolch regelmäßig in einer Molchstation der Farb- oder Lackanlage aufgenommen.

In der Spülstellung wiederum gemäß der Darstellung nach den Fig. 1 und 3 verbindet die Ventilkugel 18 mittels ihres Fluidweges 46 in fluidführender Weise die beiden Fluidanschlußstellen 14, 16 miteinander, und die Durchgangsöffnung 44 ist gesperrt. In dieser Spülstellung kann zum einen der nicht näher dargestellte Reinigungsmolch die Hauptstromleitung abreinigen und die Durchfahrtsöffnung 40 ungestört passieren und unabhängig hiervon läßt sich über ein Reinigungsmedium, beispielsweise in Form von Lösungsmittel, das über die Fluidanschlußstelle 14 eingebracht wird die Abreinigung der Ventilvorrichtung im Bereich des Kugelhahnes 10 vornehmen, sowie aller nachfolgenden Farbauftragseinrichtungen, die an die Fluidanschlußstelle 16 angeschlossen sind. In der dahingehenden Spülstellung weist der Handhebel 22 gemäß der Darstellung nach der Fig. 1 nach vorne.

Um einer Bedienperson die Betätigung der Ventilvorrichtung zu erleichtern, kann jeder Handhebelstellung 22 ein Betätigungsstatus, beispielsweise mittels einer Aufschrift (nicht dargestellt), auf dem Ventilgehäuseteil 12 zugeordnet sein. In einer Mitten- oder Sperrstellung zwischen der Betriebsstellung und der Spülstellung ist der Handhebel 22 aus seiner in der Fig. 1 dargestellten Spülstellung im Uhrzeigersinn um 90° nach oben verschwenkt, mit der Folge, dass in Blickrichtung auf die Fig. 2 gesehen die untere Öffnung des Fluidweges 46 der Ventilkugel 18 dem Betrachter dann zugewandt ist. In dieser nicht näher dargestellten Sperrstellung ist dann über die Ventilkugel 18 sowohl die Durchgangsöffnung 44 verschlossen als auch der Fluidweg zwischen den Fluidanschlußstellen 14 und 16. Die dahingehende Sperrstellung kann dazu dienen, bei stillgelegter Farb- oder Lackierauftraganlage die Ventilvorrichtung zu wechseln oder Reparatur- und Wartungsarbeiten an der Anlage durchzuführen.

Wie sich aus den Fig. 2 und 3 ergibt, ist die Fluidanschlußstelle 14 für das Reinigungsmedium in einer gemeinsamen Achse 48 zu der Durchgangsöffnung 44 im Ventilgehäuseteil 12 angeordnet, wobei quer zu dieser gemeinsamen Achse 48 die weitere Fluidanschlußstelle 16 angeordnet ist, die zu der Farb- und/oder Lackauftrageinrichtung führt und die eine gemeinsame erste Achse 28 mit der Schaltwelle 24 für die Ventilkugel 18 hat. Die genannten beiden Achsen 28 und 48 treffen sich mittig im Zentrum der Schwenkachse für die Ventilkugel 18, und die Achse 48 steht wiederum senkrecht auf der Längsachse 50 der Durchfahrtsöffnung 40. Ferner verläuft gemäß der Darstellung nach der Fig. 2 die erste Achse 28 senkrecht zu einer Horizontalachse 51 des zweiten Ventilgehäuseteiles 38 in der Höhe der Längsachse 50.

Wie sich des weiteren aus den Fig. 2 und 3 ergibt, ist die Ventilkugel 18 in Dichtschalen 52 geführt, die totraumoptimiert an ihrem freien Ende mit einem Dichtmittel 54 jeweils versehen sind. Die dahingehenden Dichtschalen 52 mit Dichtmitteln 54 und der Ventilkugel 18, lassen sich in Blickrichtung auf die Fig. 3 gesehen von unten her in das erste Ventilgehäuseteil 12 dergestalt bündig einsetzen, dass in der Spülstellung nach der Fig. 3 die untere Kalotte der Ventilkugel 18 mit einem geringfügigen Überstand vorsteht, der aber die Durchgangsöffnung 44 nicht dergestalt durchgreift, als das Teile der Ventilkugel 18 in die Durchfahrtsöffnung 40 für den Reinigungsmolch eingreifen könnten. Auch insoweit ist aufgrund des bündigen Abschlusses Totraum vermieden, in dem sich gegebenenfalls Farb- und/oder Lackreste einlagern könnten.

Die jeweilige Fluidanschlußstelle 14, 16 ist aus einem Einschraubteil in der Art eines Gleichbauteiles ausgebildet, was Kosten sparen hilft, das im Bereich des freien Endbereiches in eine Radialausnehmung 56 im Ventilgehäuseteil 12 eingreift. Hierdurch gibt sich am jeweiligen Einschraubboden eine Art gedichtete Anschlußverschraubung, was einen bündigen Sitz gewährleistet für die genannten Einschraubteile. Im Sinne einer günstigen Fluidstromführung weist das jeweilige Einschraubteil 14, 16 in Richtung der Verbindung mit dem Ventilgehäuseteil 12 einen konisch sich verbreiternden Fluidkanal 58 auf, der zum freien Ende des jeweiligen Einschraubteiles hin in einen weiteren Fluidkanal 60 mündet, mit demgegenüber umgekehrter Konizität.

Neben der genannten Ansteuerung des Handhebels 22 über die Tellerfeder 36 kann zusätzlich oder alternativ auch noch eine Kugelrastung vorgesehen sein, bei der nicht näher dargestellte federbelastete Kugeln in diskreten Abständen voneinander im Ventilgehäuseteil 12 gelagert sind, die einzelnen Schaltstellungen des Handhebels 22 zuordenbar sind, so dass dergestalt in jeder Spül-, Sperr- oder Betriebsstellung der Handhebel 22 zunächst verrastet ist bevor er von dort aus weiterbewegt werden kann. Dahingehende Einrichtungen sind bei Kugelhähnen üblich, so dass an dieser Stelle hierauf nicht mehr detailliert eingegangen wird.

Mit der erfindungsgemäßen Ventilvorrichtung ist sichergestellt, dass bei einem etwaigen Farb- oder Lackwechsel direkt mit dem neuen Medium nach einem Abreinigungsvorgang durch den Molch weitergearbeitet werden kann, was gegenüber bekannten Anlagen zu Zeit- und Materialersparnissen führt.

## Patentansprüche

1. Ventilvorrichtung, insbesondere für Farb- und Lackieranlagen, die mittels eines Molches abreinigbar sind, mit einem Kugelhahn (10), der ein Ventilgehäuseteil (12) mit mindestens zwei Fluidanschlußstellen (14, 16) aufweist, die mittels einer im Ventilgehäuseteil (12) angeordneten Ventilkugel (18) fluidführend miteinander verbindbar oder voneinander trennbar sind, die mittels einer Schaltwelle (24), die zumindest teilweise das Ventilgehäuseteil (12) durchgreift, betätigbar ist, **dadurch gekennzeichnet, dass** ein weiteres Ventilgehäuseteil (38) eine Durchfahrtsöffnung (40) für die Durchfahrt des Molches aufweist mit zwei Anschlußstellen (42) für den Anschluß an die farb- und/oder lackführenden Verbindungsleitungen der Anlage und dass in dem weiteren Ventilgehäuseteil (38) eine Durchgangsöffnung (44) vorhanden ist, die in die Durchfahrtsöffnung (40) mündet und die von der Ventilkugel (18) absperrbar ist, wobei die Ventilkugel nahezu totraumfrei die Durchgangsöffnung (44) überdeckt.

2. Ventilvorrichtung nach Anspruch 1, **dadurch gekennzeichnet, dass** die Ventilkugel (18) in jeder ihrer möglichen Schaltstellungen über der Durchgangsöffnung (44) nicht in die Durchfahrtsöffnung (40) eingreift.

3. Ventilvorrichtung nach Anspruch 1 oder 2, **dadurch gekennzeichnet, dass**
- in einer Spülstellung
die Ventilkugel (18) fluidführend die beiden Fluidanschlußstellen (14, 16) des Ventilgehäuseteiles (12) miteinander verbindet und die Durchgangsöffnung (44) sperrt,
- in einer Sperrstellung
die Ventilkugel (18) den Fluidweg (46) zwischen den beiden Fluidanschlußstellen (14, 16) und die Durchgangsöffnung (44) sperrt, und
- in einer Betriebsstellung
die Ventilkugel (18) einer der beiden Fluidanschlußstellen (14) sperrt und den Fluidweg (46) zwischen nicht gesperrter Fluidanschlußstelle (16) und der Durchgangsöffnung (44) freigibt.

4. Ventilvorrichtung nach einem der Ansprüche 1 bis 3, **dadurch gekennzeichnet, dass** die eine Fluidanschlußstelle (16) des Ventilgehäuseteiles (12) an eine Farb- und/oder Lackauftrageinrichtung anschließbar ist und die andere Fluidanschlußstelle (14) an eine Versorgungseinrichtung für ein Reinigungsmedium und dass die Durchgangsöffnung (44) über die Durchfahrtsöffnung (40) an die Farb- oder Lackversorgungseinrichtung anschließbar ist.

5. Ventilvorrichtung nach Anspruch 4, **dadurch gekennzeichnet, dass** die Fluidanschlußstelle (14) für das Reinigungsmedium in einer gemeinsamen Achse (48) zu der Durchgangsöffnung (44) im Ventilgehäuseteil (12) verläuft und dass quer zu dieser gemeinsamen Achse (48) die weitere Fluidanschlußstelle (16) angeordnet ist, die zu der Farb- und/oder Lackauftrageinrichtung führt und die eine gemeinsame erste Achse (28) mit der Schaltwelle (24) für die Ventilkugel (18) hat.

6. Ventilvorrichtung nach einem der Ansprüche 1 bis 5, **dadurch gekennzeichnet, dass** der Querschnitt der Durchfahrtsöffnung (40) des weiteren Ventilgehäuseteiles (38) kreisrund ist.

7. Ventilvorrichtung nach einem der Ansprüche 1 bis 6, **dadurch gekennzeichnet, dass** die Ventilkugel (18) in Dichtschalen (52) geführt ist, die totraumoptimiert an ihren freien Enden mit einem Dichtmittel (54) versehen sind.

8. Ventilvorrichtung nach einem der Ansprüche 1 bis 7, **dadurch gekennzeichnet, dass** die jeweilige Fluidanschlußstelle (14, 16) aus einem Einschraubteil für das Ventilgehäuseteil (12) ausgebildet ist, das im Bereich des freien Endbereiches des Einschraubteiles mit einer Radialausnehmung (56) versehen ist.

9. Ventilvorrichtung nach Anspruch 8, **dadurch gekennzeichnet, dass** das jeweilige Einschraubteil (14, 16) in Richtung der Verbindung mit dem Ventilgehäuseteil (12) einen konisch sich erweiternden Fluidkanal (58) aufweist.

10. Ventilvorrichtung nach einem der Ansprüche 1 bis 9, **dadurch gekennzeichnet, dass** die Schaltwelle (24) über einen Handhebel (22) betätigbar ist, der federbelastet einen Schaltweg von 180° ermöglicht.

## Claims

1. Valve device, in particular for paint and lacquer plants, cleanable by means of pigging, with a ball cock (10), comprising a valve housing part (12) with at least two fluid connection points (14, 16) being connectable with each other or disconnectable from each other by means of a valve cock (18) located within the valve housing part (12) in a fluid conveying way, being activatable by means of a selector shaft (24) projecting through the valve housing part (12) at least in part, **characterised in that** a further valve housing part (38) comprises a through passage (40) for introducing the pig, with two connection points (42) for connecting the same with the paint and/or lacquer transporting connection lines of the plant, and **in that** a through passage (44) is envisaged in the rest of the valve housing part (38), the same opening into the through passage (40) and being lockable by means of the valve cock (18), whereby the valve cock covers the through passage (44) almost entirely without dead space.

2. Valve device according to Claim 1, **characterised in that** the valve cock (18) engages the through passage (40) over the through passage (44) in each of its possible switched positions.

3. Valve device according to Claim 1 or 2, **characterised in that**
- in a flushing position
the valve cock (18) connects the two fluid connection points (14, 16) in a fluid conveying way and the through passage (44) is blocked,
- in a blocked position
the valve cock (18) blocks the fluid path (46) between the two fluid connection points (14, 16) and the through passage (44), and
- in an operating condition
the valve cock (18) blocks one of the two fluid connection points (14) and releases the fluid path (46) between the non-blocked fluid connection point (16) and the through passage (44).

4. Valve device according to one of the Claims 1 to 3, **characterised in that** one fluid connection point (16) of the valve housing part (12) can be connected to a paint and/or lacquer application plant, and the other fluid connection point (14) can be connected to a supply line for a cleaning medium, and **in that** the through passage (44) can be connected via the through passage (40) to the paint or lacquer supply means.

5. Valve device according to Claim 4, **characterised in that** the fluid connection point (14) for the cleaning medium extends along a common axis (48) with the through passage (44) in the valve housing part (12), and **in that** the further fluid connection point (16) leading to the paint and/or lacquer application plant is located transverse to this common axis (48) and comprises a common first axis (28) with the selector shaft (24) for the valve cock (18).

6. Valve device according to one of the Claims 1 to 5, **characterised in that** the cross-section of the through passage (40) of the further valve housing part (38) is circular.

7. Valve device according to one of the Claims 1 to 6, **characterised in that** the valve cock (18) is held in a sealed shell (52) equipped with a sealing means (54) at its ends in a dead space optimised way.

8. Valve device according to one of the Claims 1 to 7, **characterised in that** the relevant fluid connection point (14, 16) is formed from a threaded part for the valve housing part (12) equipped with a radial recess (56) for the threaded part in the area of the its free end section.

9. Valve device according to Claim 8, **characterised in that** the relevant threaded part (14, 16) comprises a conically expanding fluid channel (58) in the direction of the connection with the valve housing part (12).

10. Valve device according to one of the Claims 1 to 9, **characterised in that** the selector shaft (24) can be activated by means of a spring loaded hand lever (22) and enables a selection path of 180°.

## Revendications

1. Dispositif de vanne, notamment pour des installations de peinture et de vernis qui peuvent être nettoyées au moyen d'un écouvillon, comprenant un robinet (10) à bille qui a une partie (12) formant corps de vanne ayant au moins deux points (14, 16) de raccord pour du fluide qui peuvent communiquer entre eux ou être séparés l'un de l'autre d'une manière fluidique au moyen d'une bille (18) de vanne disposée dans la partie (12) formant corps de vanne, bille qui peut être actionnée au moyen d'un arbre (24) de commande qui traverse au moins en partie la partie (12) de corps de vanne, **caractérisé en ce qu'**une autre partie (38) du corps de vanne a une ouverture (40) de passage de l'écouvillon ayant deux points (42) de raccord à des conduites de l'installation dans lesquelles passe la peinture et/ou le vernis et **en ce que**, dans l'autre partie (38) de corps de vanne, il y a une ouverture de traversée, qui débouche dans l'ouverture de passage et qui peut être obturée par la bille (18) de vanne, la bille de vanne recouvrant l'ouverture (44) de traversée presque sans espace mort.

2. Dispositif de vanne suivant la revendication 1, **caractérisé en ce que** la bille (18) de vanne ne pénètre pas dans l'ouverture (40) de passage dans chacune de ses positions possibles au-dessus de l'ouverture (44) de traversée.

3. Dispositif de vanne suivant la revendication 1 ou 2, **caractérisé en ce que**
- dans une position de rinçage
la bille (18) de vanne met en communication fluidique l'un avec l'autre les deux points (14, 16) de raccord pour un fluide de la partie (12) du corps de vanne et obture l'ouverture (44) de traversée,
- dans une position d'obturation
la bille (18) de vanne bloque le trajet (46) de fluide entre les deux points (14, 16) de raccord pour un fluide et l'ouverture (44) de traversée, et
- dans une position de fonctionnement
la bille (18) de vanne bloque l'un des deux points (14) de raccord pour un fluide et dégage le trajet (46) de fluide entre le point (16) de raccord pour du fluide, qui n'est pas bloqué, et l'ouverture (44) de traversée.

4. Dispositif de vanne suivant l'une des revendications 1 à 3, **caractérisé en ce que** l'un des points (16) de raccord pour un fluide de la partie (12) de corps de vanne peut être raccordé à un dispositif de dépôt de peinture et/ou de vernis et l'autre point (14) de raccord pour un fluide peut être raccordé à un dispositif d'alimentation en un fluide de nettoyage, et **en ce que** l'ouverture (44) de traversée peut être raccordée, en passant par l'ouverture (40) de passage, au dispositif d'alimentation en peinture ou en vernis.

5. Dispositif de vanne suivant la revendication 4, **caractérisé en ce que** le point (14) de raccord pour un fluide pour le fluide de nettoyage s'étend dans la partie (12) de corps de vanne suivant un axe (18) commun à l'ouverture (44) de traversée, et **en ce que** l'autre point (16) de raccord pour un fluide est disposé transversalement à cet axe (48) commun, mène au dispositif de dépôt de peinture et/ou de vernis et a un premier axe (28) commun avec l'axe (24) de commutation de la bille (18) de vanne.

6. Dispositif de vanne suivant l'une des revendications 1 à 5, **caractérisé en ce que** la section transversale de l'ouverture (40) de passage de l'autre partie (38) de corps de vanne est circulaire.

7. Dispositif de vanne suivant l'une des revendications 1 à 6, **caractérisé en ce que** la bille (18) de vanne est guidée dans des coquilles (52) d'étanchéité qui sont munies d'une manière optimisée, du point de vue de l'espace mort, d'un moyen (54) d'étanchéité à leur extrémité libre.

8. Dispositif de vanne suivant l'une des revendications 1 à 7, **caractérisé en ce que** les points (14, 16) de raccord pour un fluide respectifs sont formés d'une partie de vissage pour la partie (12) de corps de vanne qui est munie d'un évidement (56) radial dans la zone de l'extrémité libre de la partie de vissage.

9. Dispositif de vanne suivant la revendication 8, **caractérisé en ce que** la partie (14, 16) de vissage a un canal (58) pour du fluide s'évasant coniquement en direction de la liaison avec la partie (12) de corps de vanne.

10. Dispositif de vanne suivant l'une des revendications 1 à 9, **caractérisé en ce que** l'arbre (24) de commande peut être actionné par un levier (22) à main qui permet, en étant sollicité par un ressort, d'avoir un trajet de commande de 180°.
